(19) Europäisches Patentamt / European Patent Office / Office européen des brevets

(11) **EP 2 645 085 A1**

(12) **EUROPEAN PATENT APPLICATION**
published in accordance with Art. 153(4) EPC

(43) Date of publication:
**02.10.2013 Bulletin 2013/40**

(21) Application number: **11843614.6**

(22) Date of filing: **12.09.2011**

(51) Int Cl.:
**G01N 21/27** (2006.01)     **G01N 21/01** (2006.01)
**G01N 35/08** (2006.01)     **G01N 37/00** (2006.01)
**G01N 33/543** (2006.01)    **G01N 33/553** (2006.01)

(86) International application number:
**PCT/JP2011/005126**

(87) International publication number:
**WO 2012/070175 (31.05.2012 Gazette 2012/22)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.11.2010   JP 2010263856**

(71) Applicant: **Konica Minolta, Inc.
Tokyo 100-7015 (JP)**

(72) Inventors:
• **MIYAURA, Tomoko**
  **Hino-shi**
  **Tokyo 191-8511 (JP)**
• **SANDO, Yasuhiro**
  **Hino-shi**
  **Tokyo 191-8511 (JP)**

(74) Representative: **Gille Hrabal
Patentanwälte
Brucknerstrasse 20
40593 Düsseldorf (DE)**

(54) **PRISM PART OF ANALYSIS CHIP, ANALYSIS CHIP INCLUDING THE PRISM PART, AND METHOD FOR PRODUCING A PRISM PART OF ANALYSIS CHIP**

(57)     The present Invention is a prism part (20) which is included In an analysis chip (10) of an analysis device for analyzing a specimen using surface plasmon resonance and forms, in collaboration with a flow path member (12), a flow path (13) through which a sample solution including the specimen flows, and is provided with a prism body (21) which excitation light for generating surface plasmon enters, and a gold film (25) which is provided on a specific surface (23) of the prism body (21). The prism body (21) has a mixed layer (28) having a predetermined thickness from the specific surface (23) to the inner side, and the mixed layer (28) Is characterized by being formed by the entry of gold constituting the gold film (25) in an ionized state from the specific surface (23) when the gold film (25) is formed on the specific surface (23).

FIG. 5

EP 2 645 085 A1

**Description**

**TECHNICAL FIELD**

The present invention relates to a prism part of an analysis chip for use in a surface plasmon resonance analysis device for analyzing a specimen based on a change in the resonance angle of surface plasmon resonance (SPR), or for use in a surface plasmon resonance fluorescence analysis device for analyzing a specimen by causing the specimen or a fluorescent material labeled to the specimen to emit fluorescence with use of an evanescent wave generated by surface plasmon resonance, and by measuring the fluorescence, as well as an analysis chip including the prism part, and a method for producing the prism part of the analysis chip.

**BACKGROUND ART**

Conventionally, there have been developed various analysis methods utilizing surface plasmon resonance, as a method for quantitatively analyzing a trace amount of a specimen contained in a sample solution for use in biomeasurement for detecting proteins or DNAs. In most of these analysis methods, an analysis chip using a Kretschmann configuration, in which a gold film is formed on a prism, is used. A change in the resonance angle of surface plasmon resonance, or an enhanced electric field in the vicinity of a gold film based on surface plasmon resonance in the analysis chip is utilized, and analysis of a trace amount of a specimen contained in a sample solution is carried out with high sensitivity and with high precision (see patent literature 1) .

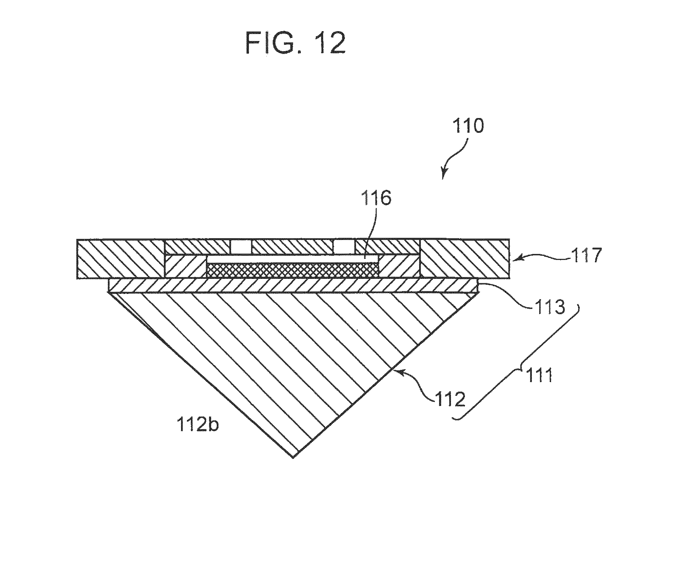

Specifically, as shown in FIG. 12, an analysis chip is provided with a prism part 111, and a channel member 117 which is cooperative with the prism part 111 to form channel 116 for flowing a sample solution. The prism part 111 has a prism main body 112 made of glass or a resin, and a gold film 113 formed on a predetermined surface 112b of the prism main body 112.

Incidence of excitation light into the prism main body 112 of the analysis chip 110 causes reflection of the excitation light on the gold film 113 formed on the predetermined surface 112b. Then, an electric filed near the surface of the gold film 113 is greatly enhanced by the excitation light incident at a predetermined incident angle. This is because incidence of excitation light into the gold film 113 at a predetermined incident angle (resonance angle) generates surface plasmon resonance on the gold film 113, whereby the electric filed near the  surface of the gold film 113 is greatly enhanced. This phenomenon is highly sensitive and responsive to a change in the refractive index on the surface of the gold film 113. Thus, utilizing the above phenomenon enables to detect a trace amount of a material residing in a sample solution flowing over the gold film 113.

However, due to weak adhesion of the gold film 113 to glass or to a resin and softness of the gold film 113, the gold film 113 is easily peeled off from the prism main body 112 or easily damaged. As a result, a part of the gold film 113 may be peeled off from the prism main body 112 or may be damaged in assembling into an analysis chip 110, or in washing the channel 116 of the analysis chip 110 each time a specimen is analyzed.

Specifically, peeling off or damage may be generated in the gold film 113, in the case where a portion of the prism part 111 at which the gold film 113 is formed is nipped with, e.g., a pair of tweezers for joining the prism part 111 and the channel member 117, after the gold film 113 is formed on the predetermined surface 112b of the prism main body 112. Further, in the case where the prism part 111 and the channel member 117 are temporarily detached from each other for washing, e.g., the channel 116, the gold film 113 may be peeled off from the prism main body 112 or may be damaged at a portion in contact with the channel member 117. As described above, in the case where peeling off or damage is generated in the gold film 113, detection of a specimen may not be carried out with precision in analyzing the specimen with use of the analysis chip 110 incorporated with the prism part 111.

**CITATION LIST**

**PATENT LITERATURE**

Patent literature 1: Japanese Patent No. 4,370,383

**SUMMARY OF INVENTION**

An object of the invention is to provide a prism part of an analysis chip in which peeling off of a gold film is suppressed, an analysis chip including the prism part, and a method for producing the prism part of the analysis chip.

A prism part of an analysis chip, an analysis chip including the prism part, and a method for producing the prism part of the analysis chip of the invention have a feature that a prism main body has a mixed layer in which gold and a material constituting the prism main body coexist along a specified surface on which a gold film is formed and on an inner side of the specified surface. The invention having the above configuration provides a prism part of an analysis chip in which peeling off of a gold film is suppressed, an analysis chip including the prism part, and a method for producing the prism part of the analysis chip.

These and other objects, features and advantages of the present invention will become more apparent upon reading the following detailed description along with the accompanying drawings.

## BRIEF DESCRIPTION OF DRAWINGS

FIG. 1 is a perspective view of an analysis chip embodying the invention;
FIG. 2 is an end view taken along the line II-II in FIG. 1;
FIG. 3 is an exploded perspective view of the analysis chip;
FIG. 4 is a cross-sectional view illustrating a structure of a prism part of an analysis chip as a modification;
FIG. 5 is an enlarged sectional view illustrating a mixed layer portion;
FIG. 6 is an exploded perspective view of an analysis chip, illustrating a seal member in a modification;

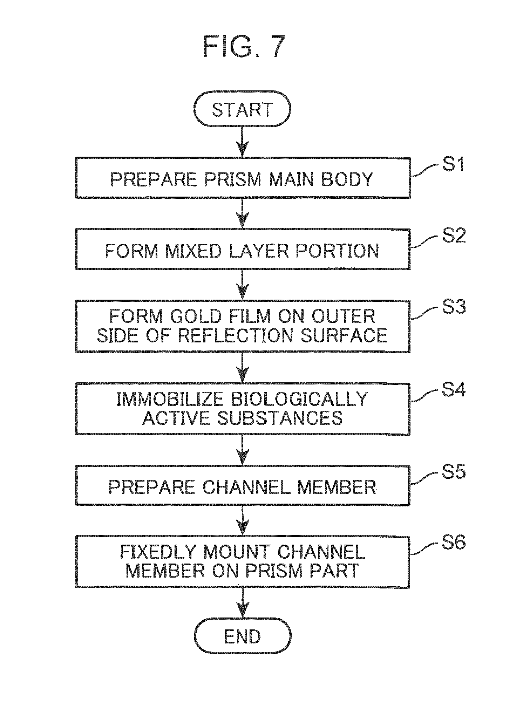

FIG. 7 is a flowchart of a method for producing an analysis chip embodying the invention;
FIG. 8 is a diagram illustrating a configuration of a vacuum film forming apparatus by a plasma support sputtering process;
FIG. 9 is a diagram illustrating a tape peeling test (a grid tape peeling test according to JIS D0202-1988);
FIG. 10 is a diagram illustrating a configuration of a vacuum film forming apparatus by an electron beam heating vacuum deposition process;
FIG. 11 is a diagram illustrating a configuration of a vacuum film forming apparatus by an ion plating process; and
FIG. 12 is a schematic longitudinal sectional view of a conventional analysis element chip.

## EMBODIMENTS FOR CARRYING OUT THE INVENTION

In the following, an embodiment of the invention is described referring to the accompanying drawings.

An analysis chip according to the embodiment is used in an analysis device for analyzing a specimen based on a change in the resonance angle of surface plasmon resonance, or is used in an analysis device for measuring fluorescence emitted by excitation of a specimen or a fluorescent material labeled to a specimen by an evanescent wave based on surface plasmon resonance. The analysis chip is a sensor chip using a Kretschmann configuration.

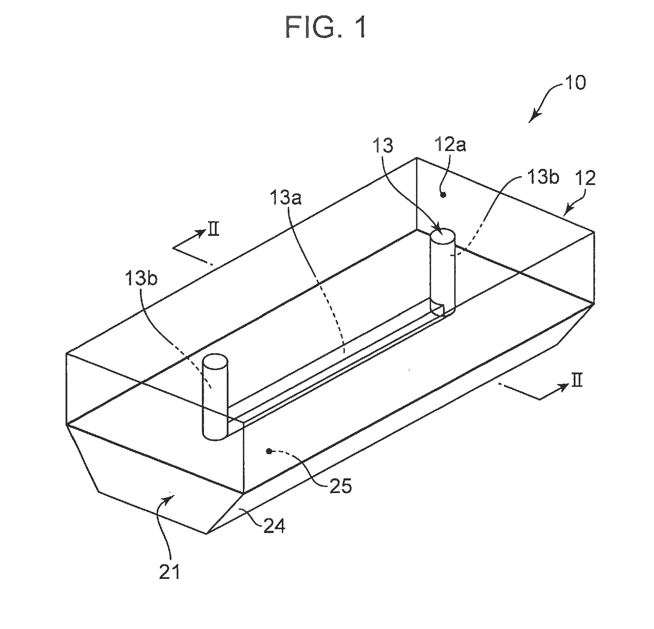

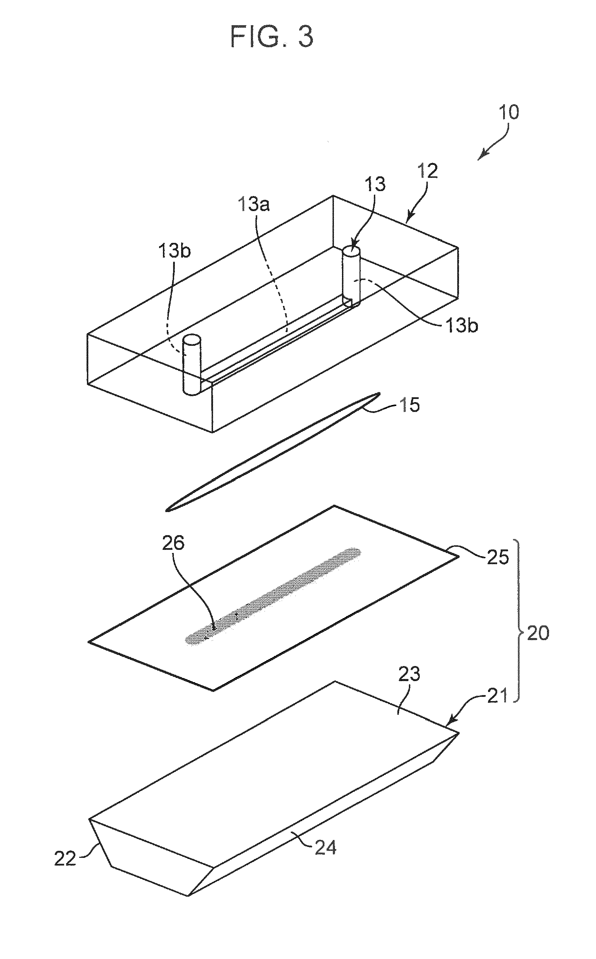

Specifically, as shown in FIGS. 1 through 3, the analysis chip is provided with a prism part 20 having a gold film 25 formed thereon, and a channel member 12 which is cooperative with the prism part 20 to form a channel 13 for flowing a sample solution containing a specimen.

The prism part 20 generates surface plasmon resonance on the gold film 25 by reflecting excitation light incident into the prism part 20 on the gold film 25. Specifically, the prism part 20 includes a prism main body 21 into which excitation light for generating surface plasmon is incident, and the gold film 25 formed on a specified surface 23 of the prism main body 21.

The prism main body 21 includes, as the surfaces thereof, an incident surface 22, the reflection surface (specified surface) 23, and an exit surface 24; and is made of transparent glass or a transparent resin.

The incident surface 22 is used for incidence of excitation light to be outputted from a light source (not shown) of a surface plasmon resonance fluorescence analysis device into the prism main body 21, in the case where the analysis chip 10 is placed in the surface plasmon resonance fluorescence analysis device for analyzing a specimen. Further, the reflection surface 23 is used for reflecting excitation light incident from the incident surface 22 into the prism main body 21 on the gold film 25 formed on the specified surface 23, in the case where the analysis chip 10 is placed in the surface plasmon resonance fluorescence analysis device for analyzing a specimen. Further, the exit surface 24 is used for outputting excitation light reflected on the reflection surface 23 (specifically, on the gold film 25 formed on the reflection surface 23) to the outside of the prism main body 21, in the case where the analysis chip 10 is placed in the surface plasmon resonance fluorescence analysis device for analyzing a specimen.

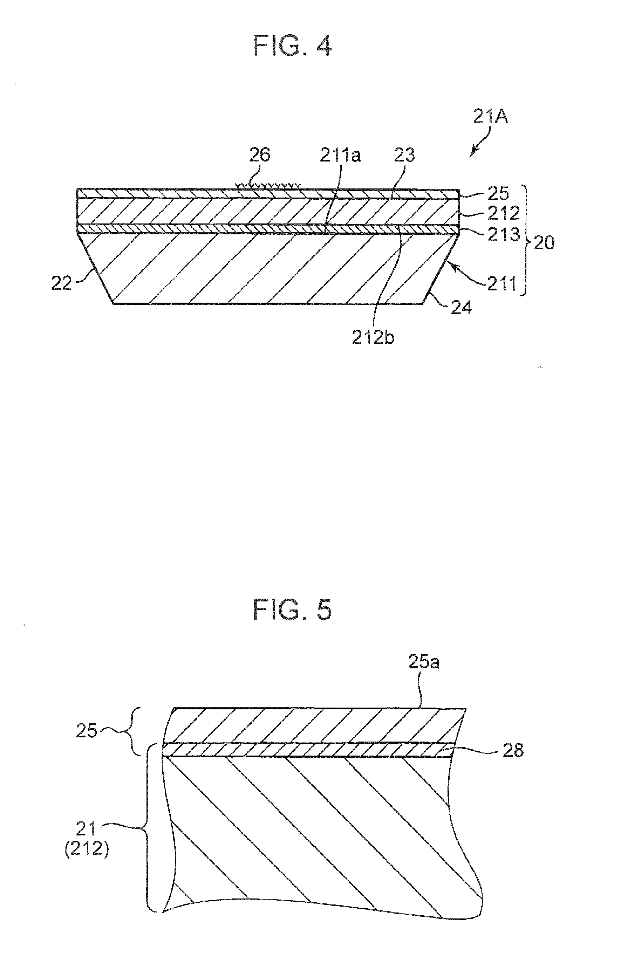

The prism main body 21 in the embodiment includes only a prism. However, the invention is not limited to the above. For instance, as shown in FIG. 4, a prism main body may include a prism 211, and a substrate 212 having a gold film 25 formed thereon. In the above modification, the gold film 25 is not formed on the prism 211, but is formed on the substrate 212. Specifically, the substrate 212 has the same refractive index as the prism 211, and has the gold film 25 formed on a surface (one surface of the substrate 212 in the thickness direction thereof) 23. The substrate 212 has a back surface (the other surface of the substrate 212 in the thickness direction thereof) 212b facing the prism 211, and is disposed on a specified surface 211 a of the prism 211 via a matching oil 213. Specifically, the substrate 212 is disposed in such a manner that the surface 23 faces the gold film 25 and that the back surface 212b faces the specified surface 211a of the prism 211 via the matching oil 213. Thus, with use of the prism main body 21A provided with the prism 211, and the substrate 212 having the gold film 25 formed thereon, it is possible to keep using the prism 211 by replacing only the substrate 212, in the case where it is necessary to replace the gold film 25 due to peeling off, smear, or damage of the gold film 25. This is advantageous in reducing the cost.

As also shown in FIG. 5, the prism main body 21 is provided with a mixed layer portion (a mixed layer) 28 having a predetermined thickness from the reflection surface 23 toward the inner side of the prism main body 21, in a direction orthogonal to the reflection surface 23.

The mixed layer portion 28 is formed by ions of gold for the gold film 25 entering into the prism main body 21 from the reflection surface 23. Specifically, in the mixed layer portion 28, a material (the aforementioned glass or resin) constituting the other portion (a portion other than the mixed layer portion 28) of the prism main body 21, and gold atoms constituting the gold film 25 coexist.

The mixed layer portion 28 has a thickness of 10 nm or smaller. As far as the mixed layer portion 28 has the aforementioned thickness, it is easy to determine the thickness of the gold film 25 suitable for surface plasmon resonance in the prism part 20. Specifically, the refractive index of the mixed layer portion 28 is different from the refractive index of the other portion of the prism main body 21. Accordingly, in the case where the thickness of the mixed layer portion 28 is larger than 10 nm, it is required to consider the refractive index or the thickness of the mixed layer portion 28 in deriving the thickness of the gold film 25 suitable for surface plasmon resonance. This makes it difficult to derive the thickness of the gold film 25 suitable for surface plasmon resonance in the prism part 20. On the other hand, in the case where the thickness of the mixed layer portion 28 is not larger than 10 nm, it is possible to derive the thickness of the gold film 25 suitable for surface plasmon resonance only from the refractive index of the other portion of the prism main body 21, without considering the refractive index or the thickness of the mixed layer portion 28. In the embodiment, the thickness of the mixed layer portion 28 is a thickness of a region in which gold is present in the prism main body 21.

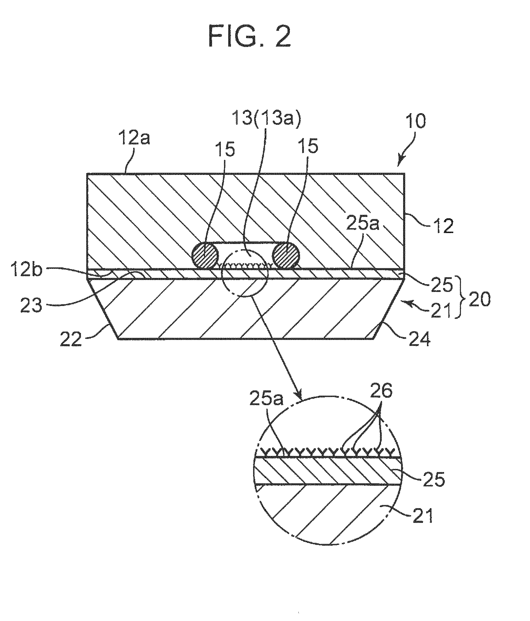

The prism main body 21 may have a shape other than a trapezoidal shape (see FIG. 2) in section as described in the embodiment. The prism main body 21 may have such a configuration that the prism main body 21 includes, as the surfaces thereof, the incident surface 22, the reflection surface 23, and the exit surface 24; excitation light incident from the incident surface 22 into the prism main body 21 is reflected on the reflection surface 23 (specifically, on the gold film 25 formed on the reflection surface 23); and the reflected excitation light is outputted to the outside from the exit surface 24 without diffuse reflection within the prism main body 21.

The gold film 25 is a thin film made of gold and is formed on the reflection surface 23 of the prism main body 21. The gold film 25 forms the mixed layer portion 28 by causing a part of a large amount of gold atoms constituting the gold film 25 to enter into the prism main body 21 from the reflection surface 23. The gold film 25 amplifies an evanescent wave to be generated by reflection of excitation light on the gold film 25 in the prism part 20. Specifically, as compared with a configuration, in which an evanescent wave is generated by causing total reflection of excitation light on a reflection surface 23 without forming a gold film 25, the configuration of forming a gold film 25 on a reflection surface 23, and generating surface plasmon resonance on the gold film 23 is advantageous in enhancing an electric field to be formed near the reflection surface 23. The film thickness of the gold film 25 is 100 nm or smaller for generating surface plasmon resonance. Preferably, the gold film 25 is formed on the reflection surface 23 with a film thickness of not smaller than 30 nm but not larger than 70 nm.

Further, biologically active substances 26 for capturing a specimen (e.g. a specific antigen) contained in a sample solution are immobilized on a surface (a surface of the gold film 25 opposite to the prism main body 21) 25a of the gold film 25. The biologically active substances 26 in the embodiment are antibodies. The biologically active substances 26 are immobilized on the surface 25a of the gold film 25 by surface treatment. Specifically, the biologically active substances 26 are immobilized in a region, on the surface 25a of the gold film 25, in contact with a sample solution that flows through the channel 13, in the case where the channel member 12 forms the channel 13 in cooperation with the prism main body 21. It should be noted that the biologically active substances 26 shown in FIG. 2 and in FIG. 4 are schematic examples, and the exemplified shapes of the biologically active substances 26 are different from the actual shape.

The thus-configured gold film 25 is formed on the reflection surface 23 by a vacuum film forming process such as an electron beam heating vacuum deposition process, a resistance heating vacuum deposition process, a magnetron sputtering process, a plasma support sputtering process, an ion assist vapor deposition process, or an ion plating process.

The channel member 12 is formed on the reflection surface 23 (specifically, on the gold film 25) of the prism main body 21, and forms the channel 13 in cooperation with the prism main body 21. The channel member 12 is made of a transparent resin. The channel member 12 in the embodiment is a plate-shaped member extending in a horizontal direction.

The channel 13 has a detecting portion 13a in which antigen-antibody reaction is performed, and guiding portions 13b for guiding a sample solution from the outside of the analysis chip 10 to the detecting portion 13a or guiding a sample solution from the detecting portion 13a to the outside of the analysis chip 10. The detecting portion 13a is surrounded by a groove formed in a back surface (the lower surface in FIG. 2) 12b of the channel member 12, and the gold film 25 formed on the prism main body 21. Specifically, in the detecting portion 13a, a sample solution flows over the surface (a surface where the biologically active substances 26 are immobilized) 25a of the gold film 25 in contact with the surface 25a. One end of each of the guiding portions 13b is opened toward a surface (the upper surface in FIG. 1) 12a of the channel member 12, and the other end (the end opposite to the one end) thereof is connected to the detecting portion 13a. Communicating one of the guiding portions 13b, the detecting portion 13a, and the other of the guiding portions 13b in this order forms the one channel 13.

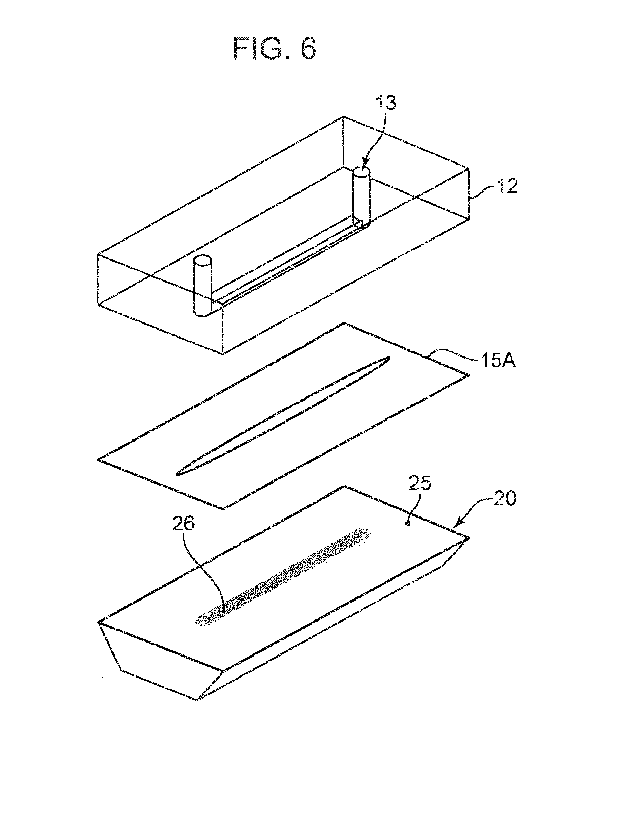

Further, the channel member 12 has a seal member 15 in the groove of the back surface 12b constituting the channel 13. The seal member 15 surrounds the detecting portion 13a in a horizontal direction, and is adhesively attached to an inner surface of the groove in the back surface 12b of the channel member 12 and to the gold film 25 of the prism part 20, in the case where the channel member 12 is joined to the prism main body 21 from the gold film 25 side. This configuration prevents leakage of a sample solution from a joined portion between the channel member 12 and the prism part 20. The seal member 15 in the embodiment is a so- called O- ring. The seal member 15 is not limited to an O- ring. For instance, as shown in FIG. 6, the seal member may be a both- side adhesive sheet 15A having such a shape that a through portion corresponding to the detecting portion 13a of the channel 13 is formed. In the modification, the seal member is disposed between the channel member 12 and the prism part 20.

The channel member 12 is joined to the prism part 20 by a fixing member such as a clamp or a screw so that the back surface 12b is pressingly mounted on the reflection surface 23 (specifically, on the gold film 25) of the prism part 20. The above configuration makes it easy to detach the channel member 12 and the prism part 20 from each other, and is advantageous in replacing the prism part 20 due to smear or damage of the gold film 25.

The channel member 12 may not be detachably joined to the prism part 20. Specifically, the channel member 12 may be adhesively joined to the prism part 20, or may be joined to the prism part 20 by laser welding or ultrasonic welding. Further, as far as the channel member 12 and the prism part 20 are liquid-tightly joined, the seal member 15 for surrounding the detecting portion 13a may be omitted.

The thus-configured analysis chip 10 is produced as follows.

<Production of Prism Part>

A prism main body (a prism in the embodiment) 21 of a predetermined shape is prepared (Step S1). The prism main body 21 is placed in a film forming position of, e.g., a vacuum film forming apparatus. Then, a gold film 25 is formed on a reflection surface 23 by the vacuum film forming apparatus. Specifically, the prism main body 21 is placed in a vacuum atmosphere, and gold (gold ions) in an ionized state is supplied onto the reflection surface 23. By the supply, the gold film 25 is formed substantially on the entirety of the reflection surface 23. In the embodiment, the gold film 25 is formed on the reflection surface 23 by a vacuum film forming process such as an electron beam heating vacuum deposition process, a magnetron sputtering process, a plasma support sputtering process, an ion assist vapor deposition process, or an ion plating process.

Specifically, the prism main body 21 is placed in a vacuum chamber of a vacuum film forming apparatus, and the air in the vacuum chamber is exhausted. By the exhaustion, the inside of the chamber is brought to a vacuum atmosphere. The vacuum film forming apparatus generates gold ions to be supplied onto the reflection surface 23 in the chamber of a vacuum atmosphere, and supplies the gold ions onto the reflection surface 23. In the supply, the gold to be supplied onto the reflection surface 23 may not be in a completely ionized state.

A part of a large amount of gold ions that reached the reflection surface 23 (namely, gold ions having an energy higher than a predetermined energy) enters into the prism main body 21 from the reflection surface 23, whereby a mixed layer portion 28 is formed on the prism main body 21 (Step S2). As gold ions are continued to be supplied onto the reflection surface 23, the gold is deposited on the outer side of the reflection surface 23 in such a manner as to continue from a layer of gold that has entered into the prism main body 21 (into a mixed layer). Then, when the gold is deposited up to a predetermined thickness, formation of the gold film 25 is completed (Step S3). In the thus-formed gold film 25, the gold atoms entered into the prism main body 21 from the reflection surface 23 act as an anchor. As a result, the reflection surface 23 of the prism main body 21 made of a resin or glass, and the gold film 25 are firmly adhesively attached to each other. In the adhesion, as the amount of gold ions to be supplied onto the reflection surface 23 increases, the amount of gold that enters from the reflection surface 23 per unit area increases. Further, as the energy of gold ions that have reached (collided) the reflection surface 23 increases, the distance by which the gold ions enter into the prism main body 21 from the reflection surface 23 increases. In other words, the thickness of the mixed layer portion 28 increases.

As described above, a prism part 20 provided with a prism main body 21 having a mixed layer portion 28 formed thereon, and a gold film 25 is produced.

<Production of Analysis Chip>

Biologically active substances 26 are immobilized in a predetermined region on a surface 25a of the gold film 25 by surface treatment (Step S4). The predetermined region is a portion (region) corresponding to a detecting portion 13a of a channel 13 in the case where a channel member 12 is joined to the prism part 20.

The channel member 12 of a predetermined shape is prepared (Step S5). The channel member 12 is abutted against the prism part 20 from the gold film 25 side. In this state, the channel member 12 is fixedly mounted to the prism part 20 by, e.g., screws (Step S6), whereby an analysis chip 10 is fabricated.

In the thus-configured analysis chip 10, a part of the gold film 25 is entered into the prism main body 21 (into the mixed layer portion 28). This is advantageous in enhancing adhesion of the gold film 25 to the prism main body 21. The adhesion suppresses the gold film 25 from peeling off from the prism main body 21. Specifically, a part of a large amount of gold atoms constituting the gold film 25 is entered into the prism main body 21 and forms the mixed layer portion 28 to thereby firmly join the prism main body 21 and the gold film 25. By the joining, the adhesion strength of the gold film 25 to the prism main body 21 is enhanced, as compared with a gold film which is formed on a specified surface without formation of a mixed layer portion 28 on a prism main body 21.

The prism part 20, the analysis chip 10 including the prism part 20, and the method for producing the prism part 20 of the analysis chip 10 according to the invention are not limited to the embodiment. It should be appreciated that various modifications are applicable, as far as such modifications do not depart from the scope of the present invention.

In the embodiment, in forming a gold film 25 on a reflection surface 23, a step of forming a mixed layer portion 28 by implanting gold ions into the reflection surface 23, and a step of forming a portion of the gold film 25 on the outer side of the reflection surface 23 are sequentially carried out by a vacuum film forming process. The invention is not limited to the above. For instance, a mixed layer portion 28 may be formed in advance by implanting gold ions from a reflection surface 23 by an ion implantation process, and thereafter, a portion of a gold film 25 on the outer side of the reflection surface 23 may be formed by a vacuum film forming process.

## EXAMPLE 1

In this section, in order to evaluate the performance of suppressing peeling off of a gold film 25 from a prism part 20 of an analysis chip 10 according to the embodiment, comparison is made between a prism part 20 having a mixed layer portion 28, and a prism part having substantially the same configuration as the embodiment except that a mixed layer is not formed.

A prism part 20 as Example 1 was fabricated (produced) as follows.

A gold film 25 of 50 nm-thickness was formed on a reflection surface 23 of a prism main body 21 made of LaF71 (crown-based glass containing lanthanum) by a plasma support sputtering process.

In the following, the plasma support sputtering process is described.

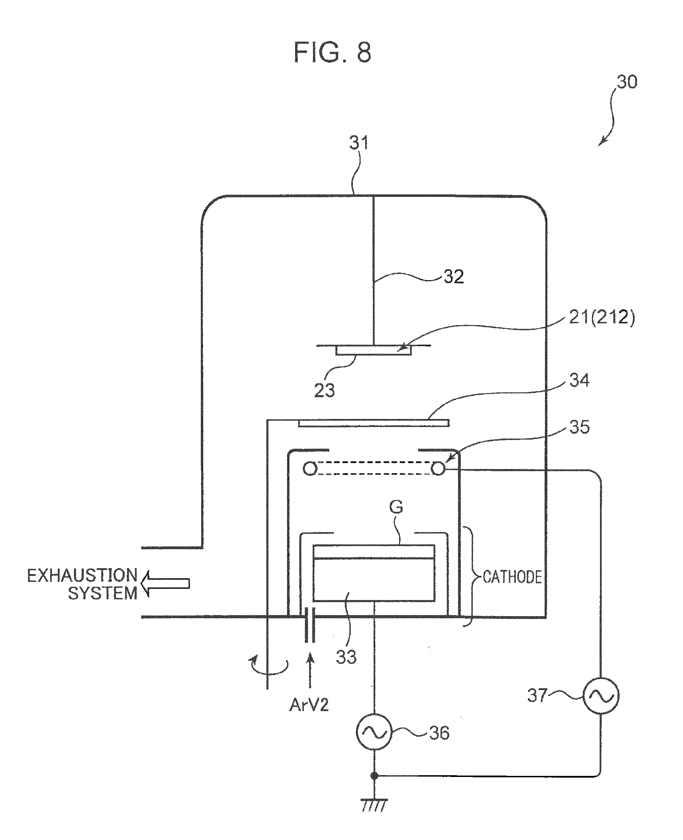

Film formation by the plasma support sputtering process is performed by, e.g., an apparatus 30 as shown in FIG. 8. The apparatus 30 is provided with a vacuum chamber 31, a holder 32 for holding a prism main body 21, a target holder 33 constituting a cathode and for holding a gold target G for generating gold ions, a shutter 34 disposed at an appropriate position on a path of gold ions flowing from the gold target G toward the prism main body 21 held on the holder 32, a support coil 35 disposed at an appropriate position on the path of gold ions, a first RF power source 36 for applying RF energy to the cathode, and a second RF power source 37 for applying RF energy to the support coil 35.

In the thus-configured apparatus 30, the prism main body 21 (or a substrate 212) is held on the holder 32 in a state that the reflection surface 23 faces the gold target G, and the air is exhausted to thereby bring the inside of the vacuum chamber 31 into a predetermined vacuum atmosphere. Then, argon gas is fed into the vacuum chamber 31, and electric discharge is generated by applying RF energy to the cathode by the first RF power source 33, whereby gold is sputtered from the gold target G by the reaction as represented by the following reaction formula.

$$Au + Ar^+ \rightarrow Au^+ + e^- + Ar^+$$

When the shutter 34 is opened, the gold ions and the gold (gold which has not been ionized) sputtered out of the gold target G are energized by high energy electrons while passing through the support coil 35 to which RF energy is applied by the second RF power source 37. Then, the gold ions having high energy collide with the reflection surface 23. By the collision, the gold ions enter into the prism main body 21 from the reflection surface 23, and a mixed layer portion 28 is formed. By continuing sputtering, the gold is deposited on the reflection surface 23, and a gold film 25 is formed. In the film formation, the high frequency electric power to be applied is 100 W on the cathode side, and 50 w on the support coil side.

A cross section of the prism main body 21 having the gold film 25 formed thereon by the aforementioned plasma support sputtering process was observed by FIB-TEM, and element analysis was performed by EDS. As a result of the observation, it was confirmed that a region containing gold atoms (i.e. the mixed layer portion 28) was formed in the range of about 9 nm from the reflection surface 23, on the reflection surface 23 side of the prism main body 21.

On the other hand, as a comparative example, a gold film of 50 nm-thickness was formed on a reflection surface 23 of a prism main body 21 by a resistance heating vacuum deposition process without a step of ionizing gold. Similarly to the above, a cross section of the prism main body 21 was observed by FIB-TEM, and element analysis was performed by EDS. As a result of the observation, it was confirmed that no region containing gold atoms was found near the reflection surface 23 of the prism main body 21. In other words, a mixed layer portion was not formed.

A tape peeling test (a grid tape peeling test according to JIS D0202-1988) was performed, and the adhesion strengths of the gold films were evaluated.

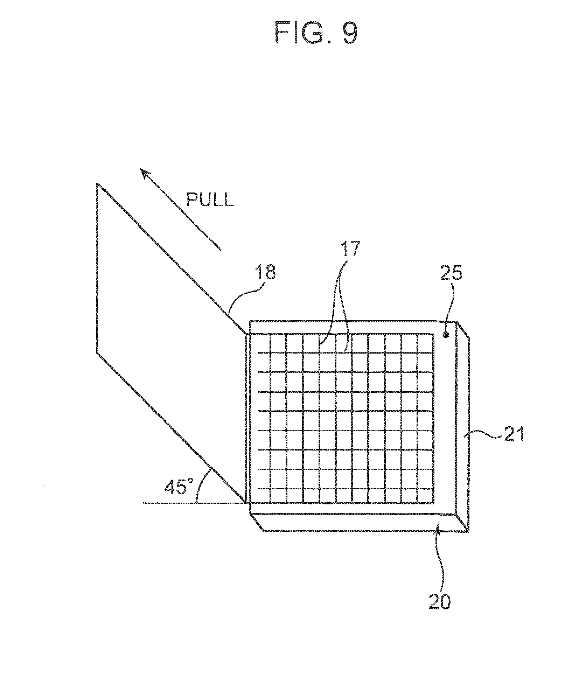

In the test, as shown in FIG. 9, grid-like cuts 17 at an interval of 1 mm were formed in each reflection surface 23 having the gold film 25 thereon in a direction from above the gold film 25. Then, after an adhesive tape 18 was attached to each of the gold films 25, the adhesive tape 18 was peeled off by tearing or pulling the adhesive tape 18 in an obliquely upward direction at an angle of 45° with respect to the reflection surface 23. The adhesion strengths (adhesiveness) of the gold films 25 to the reflection surfaces 23 were evaluated by the number of square segments of the gold films 25 that did not peel off from the reflection surfaces 23 by the tearing operation.

The result is shown in the following table 1.

[Table 1]

|  | 0-th time tearing | 1st time tearing | 2nd time tearing | 10th time tearing |
|---|---|---|---|---|
| Example 1 | 100/100 | 100/100 | 100/100 | 100/100 |
| Comparative Example | 100/100 | 38/100 | 16/100 | 0/100 |

As a result of the test, it was confirmed that a prism part 20 provided with a mixed layer portion 28 is advantageous in firmly adhering a gold film 25 to a reflection surface 23.

**EXAMPLE 2**

In this example, a prism part 20 provided with a mixed layer portion 28 was produced by forming a gold film 25 of 45 nm-thickness on a reflection surface 23 of a prism main body 21 made of E48R (cycloolefin polymer resin) by an electron beam heating vacuum deposition process.

In the following, the electron beam heating vacuum deposition process is described.

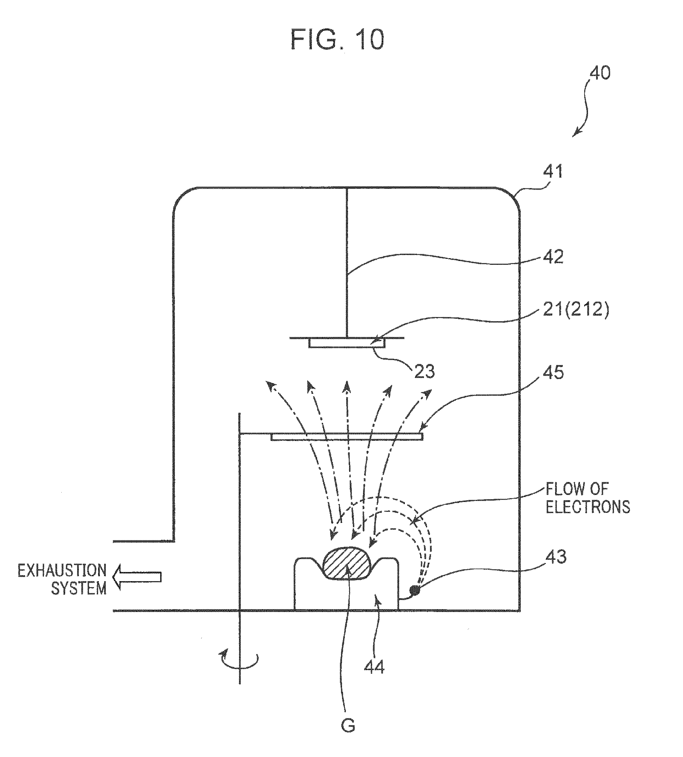

Film formation by the electron beam heating vacuum deposition process is performed by, e.g., an apparatus 40 as shown in FIG. 10. The apparatus 40 is provided with a vacuum chamber 41, a holder 42 for holding a prism main body 21, an electron gun 44 for discharging electrons from a filament 43 and loaded with a gold ingot G, and a shutter 45 disposed at an appropriate position on a path of gold or gold ions flowing from the gold ingot G toward the prism main body 21 held on the holder 42.

In the thus-configured apparatus 40, the prism main body 21 (or a substrate 212) is held on the holder 42 in such a state that a reflection surface 23 faces the gold ingot G, and the air is exhausted to thereby bring the inside of the vacuum chamber 41 into a predetermined vacuum atmosphere. Then, a predetermined acceleration voltage and an emission current are applied to the electron gun 44 for discharging electrons from the filament 43, and a magnetic field formed near the electron gun 44 guides the electrons to the gold ingot G. When the discharged electrons are irradiated onto the gold ingot G (collide with the gold ingot G), the gold evaporates. Then, when the shutter 45 is opened, the evaporated gold passes through the flow of electrons that are irradiated onto the gold ingot G while being supplied onto the reflection surface 23. During this operation, collision ionization as represented by the following formula occurs, whereby the gold is ionized.

$$Au + e^- \rightarrow Au^+ + e^- + e^-$$

By the collision of ionized gold with the reflection surface 23, the gold ions enter into the prism main body 21 from the reflection surface 23, and form a mixed layer portion 28. By continuing discharge of electrons by the electron gun 44, the gold is deposited on the reflection surface 23, and a gold film 25 is formed. In the film formation, the acceleration voltage to be applied to electron beams is 6 kV, and an emission current is 120 mA.

A cross section of the prism main body 21 having the gold film 25 formed thereon by the aforementioned electron beam heating vacuum deposition process was observed by FIB-TEM, and element analysis was performed by EDS. As a result of the observation, it was confirmed that a region (i.e. the mixed layer portion 28) containing gold atoms was formed in the range of about 3 nm from the reflection surface 23, on the reflection surface 23 side of the prism main body 21.

On the other hand, as a comparative example, a gold film of 45 nm-thickness was formed on a reflection surface 23 of a prism main body 21 by a resistance heating vacuum deposition process without a step of ionizing gold. Similarly to the above, a cross section of the prism main body 21 was observed by FIB-TEM, and element analysis was performed by EDS. As a result of the observation, it was confirmed that no region containing gold atoms was found near the reflection surface 23 of the prism main body 21.

A tape peeling test (a grid tape peeling test according to JIS D0202-1988) was performed with respect to the two prism parts, and the adhesion strengths of the gold films were evaluated in the same manner as Example 1.

The result is shown in the following table 2.

[Table 2]

|  | 0-th time tearing | 1 st time tearing | 2nd time tearing | 10th time tearing |
|---|---|---|---|---|
| Example 2 | 100/100 | 100/100 | 100/100 | 100/100 |
| Comparative Example | 100/100 | 48/100 | 26/100 | 12/100 |

As a result of the test, it was confirmed that a prism part 20 provided with a mixed layer portion 28 is advantageous in firmly adhering a gold film 25 to a reflection surface 23, as well as Example 1.

## EXAMPLE 3

In this example, a prism part 20 provided with a mixed layer portion 28 was produced by forming a gold film 25 of 40 nm-thickness on a reflection surface 23 of a prism main body 21 made of BK7 (white sheet glass) by an ion plating process.

In the following, the electron beam heating vacuum deposition process is described.

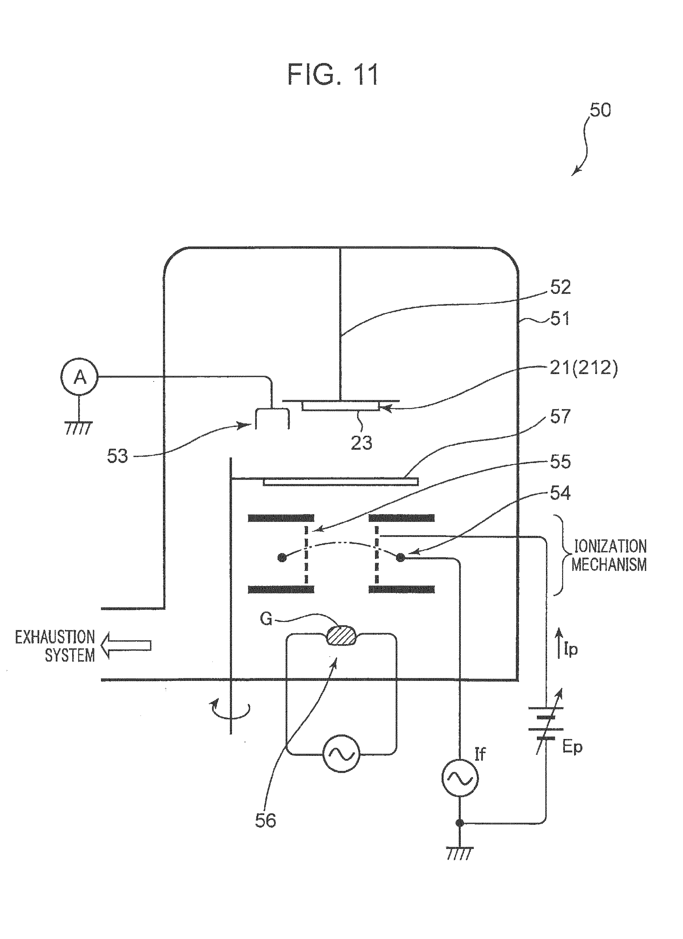

Film formation by the ion plating process is performed by, e.g., an apparatus 50 as shown in FIG. 11. The apparatus 50 is provided with a vacuum chamber 51, a holder 52 for holding a prism main body 21, a Faraday cup 53 for detecting an ion current near the holder 52, a thoria tungsten filament 54 for discharging electrons, a mesh anode 55 for accelerating the discharged electrons, a tungsten board 56 for heating a gold ingot G, and a shutter 57 disposed at an appropriate position on a path of gold or gold ions flowing from the gold ingot G toward the prism main body 21 held on the holder 52.

In the thus-configured apparatus 50, the prism main body 21 (or a substrate 212) is held on the holder 52 in such a state that a reflection surface 23 faces the gold ingot G, and the air is exhausted to thereby bring the inside of the vacuum chamber 51 into a predetermined vacuum atmosphere. Then, in response to application of an alternate-current voltage to the thoria tungsten filament 54 for discharging electrons, the electrons travel toward the mesh anode 55. In this state, the shutter 57 is opened, and the gold ingot G placed on the tungsten board 56 is heated to evaporate. By the above operation, the evaporated gold passes through the flow of electrons from the thoria tungsten filament 54 toward the mesh anode 55 while being supplied onto the reflection surface 23. During this operation, collision ionization as represented by the following formula occurs, whereby the gold is ionized.

$$Au + e^- \rightarrow Au^+ + e^- + e^-$$

By the collision of ionized gold with the reflection surface 23, the gold ions enter into the prism main body 21 from the reflection surface 23, and form a mixed layer portion 28. By continuing discharge of electrons by the thoria tungsten filament 54, the gold is deposited on the reflection surface 23, and a gold film 25 is formed. In the film formation, the electric power of an evaporation source is 500 W, the voltage to be applied for ionization is 0.5 kV, and an emission current is 500 mA.

A cross section of the prism main body 21 having the gold film 25 formed thereon by the aforementioned ion plating process was observed by FIB-TEM, and element analysis was performed by EDS. As a result of the observation, it was confirmed that a region (i.e. the mixed layer portion 28) containing gold atoms was formed in the range of about 6 nm from the reflection surface 23, on the reflection surface 23 side of the prism main body 21.

On the other hand, as a comparative example, a gold film of 40 nm-thickness was formed on a reflection surface 23 of a prism main body 21 by a resistance heating vacuum deposition process without a step of ionizing gold. Similarly to the above, a cross section of the prism main body 21 was observed by FIB-TEM, and element analysis was performed by EDS. As a result of the observation, it was confirmed that no region containing gold atoms was found near the reflection surface 23 of the prism main body 21.

A tape peeling test (a grid tape peeling test according to JIS D0202-1988) was performed with respect to the two prism parts, and the adhesion strengths of the gold films were evaluated in the same manner as Example 1 and Example 2.

The result is shown in the following table 3.

[Table 3]

|  | 0-th time tearing | 1 st time tearing | 2nd time tearing | 10th time tearing |
|---|---|---|---|---|
| Example 3 | 100/100 | 100/100 | 100/100 | 100/100 |
| Comparative Example | 100/100 | 32/100 | 8/100 | 0/100 |

As a result of the test, it was confirmed that a prism part 20 provided with a mixed layer portion 28 is advantageous in firmly adhering a gold film 25 to a reflection surface 23, as well as Example 1 and Example 2.

[Summary of the Embodiment]

The following is a summary of the embodiment.

A prism part of an analysis chip according to an embodiment is a prism part to be included in an analysis chip for use in an analysis device for analyzing a specimen utilizing surface plasmon resonance, the analysis chip being operative to generate the surface plasmon resonance, the prism part being cooperative with a channel member to form a channel for flowing a sample solution containing the specimen. The prism part is provided with a prism main body into which excitation light for generating the surface plasmon resonance is incident, and a gold film formed on a specified surface of the prism main body. The prism main body has a mixed layer in which gold and a material constituting the prism main body coexist along the specified surface on which the gold film is formed, and on an inner side of the specified surface.

In the above configuration, forming a mixed layer in which gold constituting a gold film and a material constituting a prism main body coexist is advantageous in increasing the adhesion strength of the gold film to the prism main body, as compared with a prism part, in which a gold film is formed on a specified surface of a prism main body, without a mixed layer. In other words, the adhesion strength of a gold film to a prism main body is enhanced by interaction between the gold atoms residing in a mixed layer, and the gold atoms residing on the outer side of a specified surface.

In the prism part having the above configuration, for instance, the mixed layer may be formed by ions of gold for the gold film entering into the prism part from the specified surface in the formation of the gold film on the specified surface.

As described above, causing a part of a gold film to enter into a prism main body (into a mixed layer) is advantageous in obtaining high adhesion of the gold film to the prism main body. This suppresses peeling off of the gold film from the prism main body. Specifically, forming a mixed layer by causing a part of a large amount of gold atoms constituting a gold film to enter into a prism main body firmly joins the prism main body and the gold film. This is advantageous in enhancing the adhesion strength of the gold film to the prism main body.

In the above configuration, preferably, the mixed layer may have a thickness of 10 nm or smaller.

A mixed layer having the above thickness is advantageous in easily determining the thickness of a gold film suitable for surface plasmon resonance in the prism part. Specifically, the refractive index of a mixed layer is different from the refractive index of the other portion (a portion other than the mixed layer) of a prism main body. Accordingly, if the thickness of a mixed layer exceeds 10 nm, it is required to take into consideration of the refractive index or the thickness of a mixed layer in deriving the thickness of a gold film suitable for surface plasmon resonance. This makes it difficult to derive the thickness of a gold film suitable for surface plasmon resonance in a prism part 20. On other hand, a mixed layer having a thickness of 10 nm or smaller is advantageous in deriving the thickness of a gold film suitable for surface plasmon resonance only from the refractive index of the other portion of a prism main body, without considering the refractive index or the thickness of the mixed layer.

Forming the gold film having a thickness of not smaller than 30 nm but not larger than 70 nm in the prism part having the above configuration is advantageous in generating an enhanced electric field of an intensity sufficient for detecting a specimen in the vicinity of the gold film, in the case where surface plasmon resonance is generated in the gold film of the analysis chip incorporated with the prism part.

Further, an analysis chip according to the embodiment is an analysis chip for use in an analysis device for analyzing a specimen utilizing surface plasmon resonance, the analysis chip being operative to generate the surface plasmon resonance. The analysis chip is provided with a prism part, and a channel member which is cooperative with the prism part to form a channel for flowing a sample solution containing the specimen. The prism part has a prism main body into which excitation light for generating the surface plasmon resonance is incident, and a gold film formed on a specified surface of the prism main body. The prism main body has a mixed layer in which gold and a material constituting the prism main body coexist along the specified surface on which the gold film is formed, and on an inner side of the specified surface.

In the above configuration, forming a mixed layer in which gold constituting a gold film and a material constituting a prism main body coexist is advantageous in obtaining high adhesiveness of a gold film with respect to the prism main body. This suppresses peeling off of the gold film from the prism main body. Specifically, the adhesion strength of a gold film to a prism main body is enhanced by interaction between the gold atoms residing in a mixed layer, and the gold atoms residing on the outer side of a specified surface.

Further, a method for producing a prism part according to the embodiment is a method for producing a prism part to be included in an analysis chip for use in an analysis device for analyzing a specimen utilizing surface plasmon resonance, the analysis chip being operative to generate the surface plasmon resonance, the prism part being cooperative with a channel member to form a channel for flowing a sample solution containing the specimen. The method is provided with a film forming step of forming a gold film on a specified surface of a prism main body, the prism main body being prepared in advance for allowing incidence of excitation light for generating the surface plasmon resonance. In the film forming step, gold in an ionized state is supplied onto the specified surface in such a manner that the gold in an ionized state enters into the prism main body from the specified surface.

The above configuration is advantageous in producing a prism part in which peeling off of a gold film from a prism main body is suppressed. Specifically, in the step of forming a gold film, a part of a large amount of gold atoms constituting the gold film is entered into the prism main body to thereby obtain a prism part in which the adhesion strength between the prism main body and the gold film is large.

Specifically, in the film forming step, the gold film is formed by one of film forming processes including an electron beam heating vacuum deposition process, a magnetron sputtering process, a plasma support sputtering process, an ion assist deposition process, and an ion plating process. This configuration is advantageous in supplying gold ions onto a specified surface in forming a gold film in such a manner that gold in an ionized state enters into a prism main body.

**INDUSTRIAL APPLICABILITY**

As described above, a prism part of an analysis chip, an analysis chip including the prism part, and a method for producing the prism part of the analysis chip of the invention are useful in easily handling an analysis chip to be used in a surface plasmon resonance analysis device or a surface plasmon resonance fluorescence analysis device, and is suitable for suppressing peeling off of a gold film from a prism main body.

**Claims**

1. A prism part of an analysis chip for use in an analysis device for analyzing a specimen utilizing surface plasmon resonance, the analysis chip being operative to generate the surface plasmon resonance, the prism part being cooperative with a channel member to form a channel for flowing a sample solution containing the specimen, the prism part comprising:

   a prism main body into which excitation light for generating the surface plasmon resonance is incident; and
   a gold film formed on a specified surface of the prism main body, wherein
   the prism main body has a mixed layer in which gold and a material constituting the prism main body coexist along the specified surface on which the gold film is formed, and on an inner side of the specified surface.

2. The prism part of an analysis chip according to claim 1, wherein
   the mixed layer is formed by ions of gold for the gold film entering into the prism part from the specified surface in the formation of the gold film on the specified surface.

3. The prism part of an analysis chip according to claim 1 or 2, wherein
   the mixed layer has a thickness of 10 nm or smaller.

4. The prism part of an analysis chip according to any one of claims 1 through 3, wherein
   the gold film has a thickness of not smaller than 30 nm but not larger than 70 nm.

5. An analysis chip for use in an analysis device for analyzing a specimen utilizing surface plasmon resonance, the analysis chip being operative to generate the surface plasmon resonance, the analysis chip comprising:

a prism part; and
a channel member which is cooperative with the prism part to form a channel for flowing a sample solution containing the specimen,
the prism part including:

a prism main body into which excitation light for generating the surface plasmon resonance is incident; and
a gold film formed on a specified surface of the prism main body, wherein the prism main body has a mixed layer in which gold and a material constituting the prism main body coexist along the specified surface on which the gold film is formed, and on an inner side of the specified surface.

6. A method for producing a prism part of an analysis chip for use in an analysis device for analyzing a specimen utilizing surface plasmon resonance, the analysis chip being operative to generate the surface plasmon resonance, the prism part being cooperative with a channel member to form a channel for flowing a sample solution containing the specimen, the method comprising:

a film forming step of forming a gold film on a specified surface of a prism main body prepared in advance for allowing incidence of excitation light for generating the surface plasmon resonance, wherein
in the film forming step, gold ions are supplied onto the specified surface so as to enter into the prism main body from the specified surface.

7. The method for producing a prism part of an analysis chip according to claim 6, wherein
in the film forming step, the gold film is formed by one of film forming processes including an electron beam heating vacuum deposition process, a magnetron sputtering process, a plasma support sputtering process, an ion assist deposition process, and an ion plating process.

FIG. 1

# FIG. 2

FIG. 3

# FIG. 4

# FIG. 5

# FIG. 6

# FIG. 7

START

↓

PREPARE PRISM MAIN BODY — S1

↓

FORM MIXED LAYER PORTION — S2

↓

FORM GOLD FILM ON OUTER SIDE OF REFLECTION SURFACE — S3

↓

IMMOBILIZE BIOLOGICALLY ACTIVE SUBSTANCES — S4

↓

PREPARE CHANNEL MEMBER — S5

↓

FIXEDLY MOUNT CHANNEL MEMBER ON PRISM PART — S6

↓

END

# FIG. 8

EXHAUSTION
SYSTEM

ArV2

CATHODE

# FIG. 9

# FIG. 10

40

41

42

21(212)

23

45

FLOW OF
ELECTRONS

43

EXHAUSTION
SYSTEM

44

G

# FIG. 11

FIG. 12

<table>
<tr><td colspan="2" align="center">**INTERNATIONAL SEARCH REPORT**</td><td colspan="2">International application No.<br>PCT/JP2011/005126</td></tr>
</table>

A. CLASSIFICATION OF SUBJECT MATTER

*G01N21/27*(2006.01)i, *G01N21/01*(2006.01)i, *G01N35/08*(2006.01)i, *G01N37/00*
(2006.01)i, *G01N33/543*(2006.01)n, *G01N33/553*(2006.01)n

According to International Patent Classification (IPC) or to both national classification and IPC

B. FIELDS SEARCHED

Minimum documentation searched (classification system followed by classification symbols)
G01N21/00-21/61, G01N35/08, G01N37/00, G01N33/543, G01N33/553

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)
JSTPlus(JDreamII)

C. DOCUMENTS CONSIDERED TO BE RELEVANT

| Category* | Citation of document, with indication, where appropriate, of the relevant passages | Relevant to claim No. |
|---|---|---|
| A | JP 2010-197181 A (Toyota Central Research and Development Laboratories, Inc.), 09 September 2010 (09.09.2010), paragraph [0026] (Family: none) | 1-7 |
| A | JP 2009-133844 A (Seikou Giken Co., Ltd.), 18 June 2009 (18.06.2009), paragraph [0028] & US 2009/0116020 A1 & CN 101424683 A | 1-7 |
| A | JP 2009-085714 A (National Institute of Advanced Industrial Science and Technology), 23 April 2009 (23.04.2009), paragraphs [0015], [0025], [0026] & WO 2009/041195 A1 | 1-7 |

☒ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search<br>14 November, 2011 (14.11.11) | Date of mailing of the international search report<br>22 November, 2011 (22.11.11) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2011/005126

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2009-045514 A  (Stanley Electric Co., Ltd.), 05 March 2009 (05.03.2009), paragraphs [0038], [0039] (Family: none) | 1-7 |
| A | JP 2008-203216 A  (Seikou Giken Co., Ltd.), 04 September 2008 (04.09.2008), paragraph [0033] (Family: none) | 1-7 |
| A | JP 2002-090291 A  (Kanagawa Academy of Science and Technology, Japan Science and Technology Corp.), 27 March 2002 (27.03.2002), paragraph [0046] (Family: none) | 1-7 |

Form PCT/ISA/210 (continuation of second sheet) (July 2009)

**EP 2 645 085 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4370383 B